(19) Europäisches Patentamt
European Patent Office
Office européen des brevets

(11) **EP 2 429 231 A1**

(12) **EUROPEAN PATENT APPLICATION**
published in accordance with Art. 153(4) EPC

(43) Date of publication:
**14.03.2012 Bulletin 2012/11**

(51) Int Cl.:
**H04W 28/00** (2009.01)

(21) Application number: **10791415.2**

(22) Date of filing: **31.05.2010**

(86) International application number:
**PCT/CN2010/073370**

(87) International publication number:
**WO 2010/148909 (29.12.2010 Gazette 2010/52)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **21.12.2009 CN 200910189124**

(71) Applicant: **ZTE Corporation**
**Shenzhen, Guangdong 518057 (CN)**

(72) Inventors:
• **HOU, Xiaohui**
**Shenzhen**
**Guangdong 518057 (CN)**

• **YANG, Feng**
**Shenzhen**
**Guangdong 518057 (CN)**
• **LU, Qinbo**
**Shenzhen**
**Guangdong 518057 (CN)**

(74) Representative: **Manitz, Finsterwald & Partner GbR**
**Martin-Greif-Strasse 1**
**80336 München (DE)**

(54) **DEMODULATION METHOD AND SYSTEM BASED ON THE APPLICATION OF MULTI-USER MULTIPLEXED IN ONE TIME SLOT**

(57)     The present invention discloses a demodulation method and system based on the multi-user reusing one slot application. The method includes: obtaining a first signal to interference and noise ratio according to the strong signal transmitted in a channel which has larger impulse response power in two wireless channels (S10); performing reconstruction on said strong signal (S11); subtracting a reconstructed signal based on said strong signal from the total signal received from two wireless channels to obtain a weak signal (S12); obtaining a second signal to interference and noise ratio according to said weak signal, and judging whether said second signal to interference and noise ratio is larger than a preset first iteration threshold, if yes, performing reconstruction on said weak signal, and updating said first iteration threshold with said second signal to interference and noise ratio; otherwise, ending a current processing process; and subtracting a reconstructed signal based on said weak signal from the total signal (S15) to obtain a strong signal, and performing reconstruction on the obtained strong signal again. With the present invention, the demodulation performance of the communication system can be improved significantly.

FIG. 1

EP 2 429 231 A1

## Description

Technical Field

The present invention relates to the uplink demodulation technique, and in particularly, to a demodulation method and system based on the multi-user reusing one slot application.

Background of the Related Art

The Global Mobile Communication System (GSM) is a Time Division Multiplexing Access (TDMA) and Frequency Division Multiplexing Access (FDMA) system. At present, for the existing GSM, one channel can only bear one path of the Full Rate (FR) voice service, or bear two paths of the Half Rate (HR) voice service on two sub-channels of one channel. It needs to be pointed out specifically that these two paths of HR voice actually are not transmitted and received at one slot of one frequency point at the same time on the Um interface (the wireless interface), that is, voice transmission on two sub-channels of the same channel is still implemented by the time division. The Multi-user Reusing One Slot (MUROS) application technique is an advanced technique of the GSM regarding to the Circuit Switch Service (CS Service), and the basic function that the MUROS application technique wishes to implement is to increase the capacity of Um interface to twice so as to achieve the object of increasing the CS service network capacity of the GSM network in the premise of not changing GSM network hardware device as much as possible. In other words, the FR service requests that one channel bears two paths of voice at the same time, and the HR service requests that one channel bears four paths of voice at the same time. Therefore, in the MUROS application of the GSM network, for the uplink, there will be two Gaussianfiltered Minimum Shift Keying (GMSK) modulation signals to be transmitted at one slot of one frequency point at the same time all the time, and thus the mutual interference between these two signals will be caused. The manner in the prior art usually use a traditional Maximum-Likelihood Sequence Estimation (MLSE) demodulation technique to perform uplink demodulation, and as two signals suffered the much stronger co-channel interference of the other party to each other, the worse performance of traditional demodulation is caused and the needs of the actual demodulation application of the GSM can be satisfied.

Summary of the Invention

The object of the present invention is to provide a demodulation method and system based on the multi-user reusing one slot application, which can significantly increase the uplink demodulation performance of the communication system.

The present invention provides a demodulation method based on a multi-user reusing one slot application, which comprises:

obtaining a first signal to interference and noise ratio according to a strong signal transmitted in a channel which has larger impulse response power in two wireless channels;

performing reconstruction on said strong signal;

subtracting a reconstructed signal based on said strong signal from a total signal received from two wireless channels to obtain a weak signal;

obtaining a second signal to interference and noise ratio according to said weak signal, and judging whether said second signal to interference and noise ratio is larger than a preset first iteration threshold, and if yes, performing reconstruction on said weak signal, and updating said first iteration threshold with said second signal to interference and noise ratio; otherwise, ending a current processing process; and

subtracting a reconstructed signal based on said weak signal from the total signal to obtain a strong signal, and performing reconstruction on an obtained strong signal again.

Preferably, before performing reconstruction on the obtained strong signal again, the method further comprises:

obtaining a third signal to interference and noise ratio according the obtained strong signal;

judging whether said third signal to interference and noise ratio is larger than a second iteration threshold, an initial value of the second iteration threshold being the first signal to interference and noise ratio, if yes, updating said second iteration threshold with said third signal to interference and noise ratio; otherwise, ending the current processing process.

Preferably, obtaining the first signal to interference and noise ratio according to the strong signal transmitted in the channel which has larger impulse response power in two wireless channels comprises:

performing a channel estimation on two wireless channels, obtaining impulse responses of the channels;

selecting a signal transmitted in the channel which has larger impulse response power as the strong signal;

performing demodulation processing on the strong signal according to the impulse response of the channel; and

obtaining the first signal to interference and noise ratio according to a signal obtained after the demodulation processing.

Preferably, obtaining the third signal to interference and noise ratio according to the obtained strong signal comprises:

performing a channel estimation on the channel transmitting the strong signal, obtaining an impulse response of the channel;

performing demodulation processing on the obtained strong signal according to the impulse response of the channel; and

obtaining the third signal to interference and noise ratio according to a signal obtained after the demodulation processing.

Preferably, performing reconstruction on said strong signal specifically comprises:

performing convolution on the signal obtained after the demodulation processing with the impulse response of the channel corresponding to the strong signal, and obtaining the reconstructed signal.

Preferably, obtaining the second signal to interference and noise ratio according to said weak signal comprises:

performing a channel estimation on a channel transmitting the weak signal, obtaining an impulse response of the channel;
performing demodulation processing on the weak signal according to the impulse response of the channel; and
obtaining the second signal to interference and noise ratio according to a signal obtained after the demodulation processing.

Preferably, performing reconstruction on said weak signal specifically comprises:

performing convolution on the signal obtained after the demodulation processing with the impulse response of the channel corresponding to the weak signal, and obtaining the reconstructed signal.

Preferably, before judging whether said second signal to interference and noise ratio is larger than the preset first iteration threshold, the method further comprises:

judging whether said second signal to interference and noise ratio is larger than a preset convergence threshold, if yes, ending the current processing process; otherwise, continuing to judge whether said second signal to interference and noise ratio is larger than the first iteration threshold.

Before performing reconstruction on said weak signal, the method further comprises:

judging whether current iteration times are less than preset times, if yes, performing reconstruction on said weak signal, updating said first iteration threshold with said second signal to interference and noise ratio, and adding 1 into iteration cumulative times; otherwise, ending the current processing process.

The present invention provides demodulation system based on a multi-user reusing one slot application, and the system comprises: a first signal to interference and noise ratio obtaining module, a strong signal reconstructing module, a second signal to interference and noise ratio obtaining module, a first demodulation controlling module and a strong signal re-obtaining module, wherein

the first signal to interference and noise ratio obtaining module is for: obtaining a first signal to interference and noise ratio according to a strong signal transmitted in a channel which has larger impulse response power in two wireless channels;

the strong signal reconstructing module is for: performing reconstruction on said strong signal;
the second signal to interference and noise ratio obtaining module is for: subtracting a reconstructed signal based on said strong signal from the total signal received from two wireless channels to obtain a weak signal, and obtaining a second signal to interference and noise ratio according to said weak signal;
the first demodulation controlling module is for: judging whether said second signal to interference and noise ratio is larger than a preset first iteration threshold, if yes, performing reconstruction on said weak signal, and updating said first iteration threshold with said second signal to interference and noise ratio; otherwise, ending demodulation;
the strong signal re-obtaining module is for: subtracting a reconstructed signal based on said weak signal from the total signal to obtain a strong signal, and notifying the strong signal reconstructing module and to perform reconstruction on an obtained strong signal.

Preferably, the system further comprises: a third signal to interference and noise ratio obtaining module and a second demodulation controlling module, wherein

the third signal to interference and noise ratio obtaining module is for: obtaining a third signal to interference and noise ratio according to the obtained strong signal;
the second demodulation controlling module is for: judging whether the third signal to interference and noise ratio is larger than a second iteration threshold, an initial value of the second iteration threshold being the first signal to interference and noise ratio, if yes, updating said second iteration threshold with said third signal to interference and noise ratio; otherwise, ending demodulation;

the strong signal re-obtaining module is further for: notifying the strong signal reconstructing module to perform reconstruction on the obtained strong signal via the third signal to interference and noise ratio obtaining module and the second demodulation controlling module in turn after the second demodulation controlling module updating said second iteration threshold.

Preferably, the first demodulation controlling module is further for:

judging whether said second signal to interference and noise ratio is larger than a preset convergence threshold, if yes, ending demodulation; otherwise, continuing to judge whether said second signal to interference and noise ratio is larger than the first iteration threshold;

if the second signal to interference and noise ratio is not larger than the first iteration threshold, ending demodulation; otherwise, judging whether current iteration times are less than preset times, if yes, performing reconstruction on said weak signal, updating said first iteration threshold with said second signal to interference and noise ratio, and adding 1 into iteration cumulative times; otherwise, ending demodulation.

The demodulation method and system based on the multi-user reusing one slot application in the present invention make the iteration continuously improve the demodulation performance by joining the iteration threshold into the iteration process; furthermore, implement to end the iteration process earlier at the same time when the demodulation performance is satisfied by configuring the convergence threshold, which increases the demodulation speed; and improve the demodulation performance by using multiple times of iterations.

Brief Description of Drawings

FIG. 1 is a flow schematic diagram of the demodulation method based on the multi-user reusing one slot application according to the first example of the present invention;

FIG. 2 is a flow schematic diagram of the demodulation method based on the multi-user reusing one slot application according to the second example of the present invention;

FIG. 3 is a flow schematic diagram of the demodulation method based on the multi-user reusing one slot application according to the third example of the present invention;

FIG. 4 is a flow schematic diagram of the demodulation method based on the multi-user reusing one slot application according to the fourth example of the present invention;

FIG. 5 is a structural schematic diagram of the demodulation system based on the multi-user reusing one slot application according to the fifth example of the present invention;

FIG. 6 is a structural schematic diagram of one example of the third signal to interference and noise ratio obtaining module according to the fifth example of the present invention;

FIG. 7 is a principle schematic diagram of the uplink demodulation processing based on the multi-user reusing one slot application according to the example of the present invention.

Preferred Embodiments of the Present Invention

The implementation of the objects, function characteristics and advantages of the present invention will be further illustrated with reference to drawings in the combination with the examples.

The present invention proposes a demodulation method based on the multi-user reusing one slot application, which makes the iteration continuously improve the demodulation performance by joining the iteration threshold into the iteration process; can end the iteration process earlier at the same time when the demodulation performance is satisfied by configuring the convergence threshold, which increases the demodulation speed; and can the increase demodulation performance by using multiple times of iterations.

The following examples take the GSM as an example, but the specific embodiments and applications of the present invention are not limited to the GSM, and also can applied in the 3G type communication systems of the Code Division Multiple Access (CDMA) series, such as the Wide band-Code Division Multiple Access (W-CDMA) and the Time Division Synchronous Code Division Multiple Access (TD-SCDMA), etc..

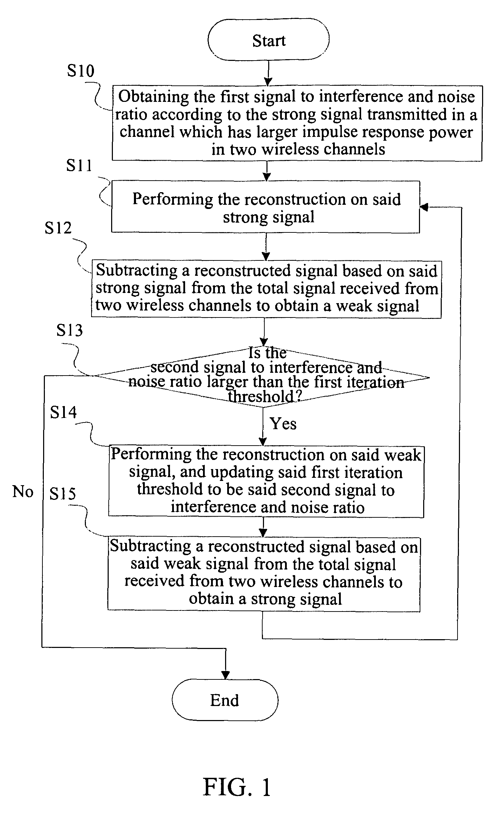

With reference to FIG 1, the present invention proposes a demodulation method based on the multi-user reusing one slot application of the first example of the present invention, which comprises steps:

S10, the first signal to interference and noise ratio is obtained according to the strong signal transmitted in a channel which has larger impulse response power in two wireless channels.

S11, the reconstruction is performed on the strong signal.

The object of this step is for the purpose of recovering the signal from the user with strong power to the receiver and then performing the interference cancellation described in the following context, wherein the user with strong power refers to the user corresponding to a strong signal transmitted in a channel which has larger impulse response power.

S12, a reconstructed signal based on said strong signal is subtracted from the total signal received from two wireless channels to obtain a weak signal.

S13, the second signal to interference and noise ratio is obtained according to said weak signal, and whether said second signal to interference and noise ratio is larger than a preset first iteration threshold is judged, and if yes, step S14 is performed; otherwise, the current processing flow ends, wherein comparing the second signal to interference and noise ratio with the first iteration threshold is to achieve a positive feedback effect when the interference cancellation is performed.

S14, the reconstruction is performed on said weak signal, and said first iteration threshold is updated with said second signal to interference and noise ratio, wherein, replacing said first iteration threshold is for the purpose of making the effect of the next iteration process better than that of the previous iteration so as to make the iteration to achieve a positive feedback effect.

S15, a reconstructed signal based on said weak signal is subtracted from the total signal received from two wireless channels to obtain a strong signal, and then step S11 is performed.

Step S10 of obtaining the first signal to interference and noise ratio according to a strong signal transmitted in a channel which has larger impulse response power in two wireless channels, further comprises steps:

performing the channel estimation on two wireless channels, obtaining impulse responses of the channels;

selecting a signal transmitted in a channel which has larger impulse response power as a strong signal;

performing demodulation processing on the strong signal according to the impulse response of the channel; and

obtaining the first signal to interference and noise ratio according to a signal obtained after the demodulation processing.

Performing the channel estimation specifically comprises: using training sequences of two paths of signals to coordinate with a channel estimation algorithm to calculate the impulse responses of the wireless channels, and the channel estimation algorithm is not limited, for example, it can be any one of the slide correlation algorithm and the Least Squares Algorithm (LS Algorithm). The training sequences of two paths of signals are orthogonal.

The demodulation combining algorithm used by the demodulation processing can be not limited, for example, it can use any one of the MLSE demodulation combining algorithm, MLSE+Maximum Ratio Combining (MRC) demodulation combining algorithm, MLSE+ Interference Rejection Combining (IRC) demodulation combining algorithm and MLSE+ Space Time Interference Rejection Combining (STIRC) demodulation combining algorithm.

Step S11 of performing the reconstruction on said strong signal specifically comprises:

performing convolution on the signal obtained after the demodulation processing with the impulse response of the channel corresponding to the strong signal to obtain a reconstructed signal.

Step S13 of obtaining the second signal to interference and noise ratio according to the weak signal further comprises steps:

performing a channel estimation on the channel transmitting the weak signal, obtaining the impulse response of the channel;

performing demodulation processing on the weak signal according to the impulse response of the channel; and

obtaining the second signal to interference and noise ratio according to the signal obtained after the demodulation processing.

Performing the channel estimation specifically comprises: using training sequences of two paths of signals to coordinate with the channel estimation algorithm to calculate the impulse response of the wireless channel, and the channel estimation algorithm is not limited, for example, it can be any one of the slide correlation algorithm and the Least Squares Algorithm (LS Algorithm). The training sequences of two paths of signals are orthogonal.

The demodulation combining algorithm used by the demodulation processing can be not limited, for example, it can use any one of demodulation combining algorithms such as the MLSE demodulation combining algorithm, MLSE+MRC demodulation combining algorithm, MLSE+IRC demodulation combining algorithm and MLSE+STIRC demodulation combining algorithm and so on.

In step S14, the first iteration threshold varies with the iteration times, and its initial value is a value which is preset according to the simulation result and the actual test, and in the second and subsequent iteration processes, its value is the second signal to interference and noise ratio which is calculated by step S13 in the previous iteration process. Performing reconstruction on said weak signal specifically comprises: performing convolution on the signal obtained after the demodulation processing on the weak signal with the impulse response of the channel corresponding to the weak signal to obtain a reconstructed signal.

The demodulation method based on the multiuser reusing one slot application of the present invention makes the iteration continuously increase the demodulation performance by joining the iteration threshold into the process of the iteration.

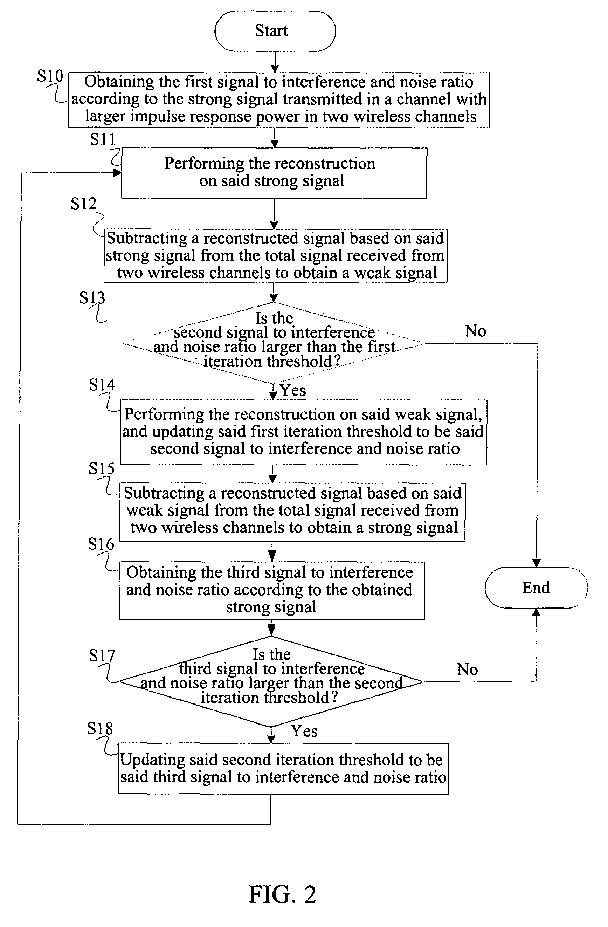

With reference to FIG. 2, the present invention proposes a demodulation method based on the multiuser reusing one slot application according to the second example based on the first example, which comprises steps:

S10, the first signal to interference and noise ratio is obtained according to the strong signal transmitted in a channel which has larger impulse response power in two wireless channels.

S11, the reconstruction is performed on the strong signal.

S12, a reconstructed signal based on said strong signal is subtracted from the total signal received from two wireless channels to obtain a weak signal.

S13, the second signal to interference and noise ratio is obtained according to said weak signal, and whether said second signal to interference and noise ratio is larger than a preset first iteration threshold is judged, and if yes, step S14 is performed; otherwise, the current processing flow ends.

S14, the reconstruction is performed on said weak signal, and said first iteration threshold is updated with said second signal to interference and noise ratio.

S15, a reconstructed signal based on said weak signal is subtracted from the total signal received from two wireless channels to obtain a strong signal.

S16, the third signal to interference and noise ratio is obtained according to the obtained strong signal.

S17, whether said third signal to interference and noise ratio is larger than the second iteration threshold is judged, and if yes, step S18 is performed; otherwise, the current processing flow ends.

S18, said second iteration threshold is updated with said third signal to interference and noise ratio, then step S11 is performed to performed the reconstruction on the obtained strong signal.

Steps S10-S15 in this example are the same with the first example, and it will not be described in detail.

Step S16 of obtaining the third signal to interference and noise ratio according to the obtained strong signal further comprises steps:

Performing the channel estimation on the channel transmitting the strong signal, obtaining the impulse response of the channel;

performing demodulation processing on the obtained strong signal according to the impulse response of the channel; and

obtaining the third signal to interference and noise ratio according to the signal obtained after the demodulation processing.

Performing the channel estimation specifically comprises: using training sequences of two paths of signals to coordinate with the channel estimation algorithm to calculate the impulse response of the wireless channel, and the channel estimation algorithm is not limited; for example, it can be any one of the slide correlation algorithm and the Least Squares Algorithm (LS Algorithm). The training sequences of two paths of signals are orthogonal.

The demodulation combining algorithm used by the demodulation processing can be not limited, for example, it can use any one of demodulation combining algorithms such as the MLSE demodulation combining algorithm, MLSE+MRC demodulation combining algorithm, MLSE+IRC demodulation combining algorithm and MLSE+STIRC demodulation combining algorithm and so on.

In step S17, the second iteration threshold is varies with the iteration times, and its initial value is the first signal to interference and noise ratio which calculated in step S10. In the second and subsequent iteration processes, its value is the third signal to interference and noise ratio which is calculated by step S16 in the previous iteration process.

The demodulation method based on the multiuser reusing one slot application of the present invention makes the iteration continuously increase the demodulation performance by joining the iteration threshold into the process of the iteration.

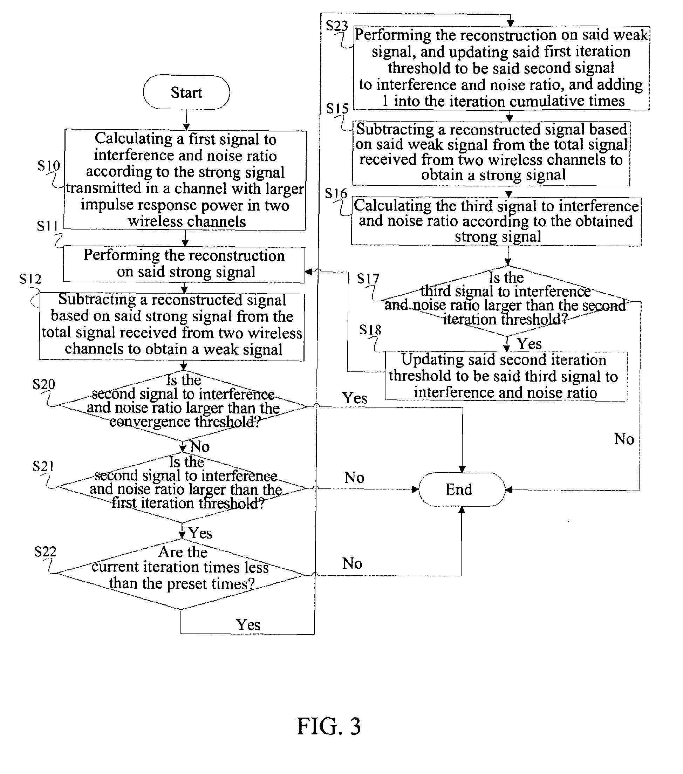

With reference to FIG. 3, the present invention proposes a demodulation method based on the multiuser reusing one slot application according to the third example based on the first example, which comprises steps:

S10, the first signal to interference and noise ratio is obtained according to the strong signal transmitted in a channel which has larger impulse response power in two wireless channels.

S11, the reconstruction is performed on the strong signal.

S12, a reconstructed signal based on said strong signal is subtracted from the total signal received from two wireless channels to obtain a weak signal.

S20, the second signal to interference and noise ratio is obtained according to said weak signal, and whether said second signal to interference and noise ratio is larger than the preset convergence threshold is judged, and if yes, the current processing flow ends; otherwise, step S21 is performed.

S21, whether the second signal to interference and noise ratio is larger than the first iteration threshold is judged, and if yes, step S22 is performed; otherwise, the current processing flow ends.

S22, whether the current iteration times are less than the preset times is judged, and if yes, step 23 is performed; otherwise, the current processing flow ends.

S23, the reconstruction is performed on said weak signal, and said first iteration threshold is updated with said second signal to interference and noise ratio, and the iteration cumulative times adds 1.

S15, a reconstructed signal based on said weak signal is subtracted from the total signal received from two wireless channels to obtain a strong signal.

S16, the third signal to interference and noise ratio is obtained according to the obtained strong signal.

S17, whether said third signal to interference and noise ratio is larger than the second iteration threshold is judged, the initial value of the second iteration threshold is the first signal to interference and noise ratio, and if yes, step S18 is performed; otherwise, the current processing flow ends.

S18, said second iteration threshold is updated with said third signal to interference and noise ratio, then step S11 is performed to perform the reconstruction on the obtained strong signal.

Steps S10-S12 and steps S15-S18 in this example are the same with steps S15-S18 of the second example, and it will not be described in detail.

In step S20, the convergence threshold is a value which is preset according to the simulation result and the actual test, and the configuration of convergence threshold can adjust the ending time of the demodulation so as to increase the demodulation speed.

Here is the explanation of the difference of the convergence threshold and iteration threshold: the convergence threshold is equivalent to one threshold of the very good performance, and if the second signal to interference and noise ratio is larger than the convergence threshold, then it denotes that the performances of the signals of current two users are very good, therefore, the iteration does not need to be performed again; and the iteration threshold is equivalent to one threshold with the lowest requirements of the positive feedback, and if the second signal to interference and noise ratio is less than the first iteration threshold, or third signal to interference and noise ratio is less than the second iteration threshold, then it can not ensure that the iteration process is a positive feedback process.

In step S21, the first iteration threshold varies with the iteration times, its initial value is a preset value, and for the second and subsequent iteration processes, its value is the second signal to interference and noise ratio which is calculated by step S20 in previous iteration process.

The demodulation method based on the multi-user reusing one slot application in the present invention makes the iteration continuously improve the demodulation performance by joining the iteration threshold into the iteration process; implements to end the iteration process earlier at the same time when the demodulation performance is satisfied by configuring the convergence threshold, which increases the demodulation speed; and improves the demodulation performance by using multiple times of iterations.

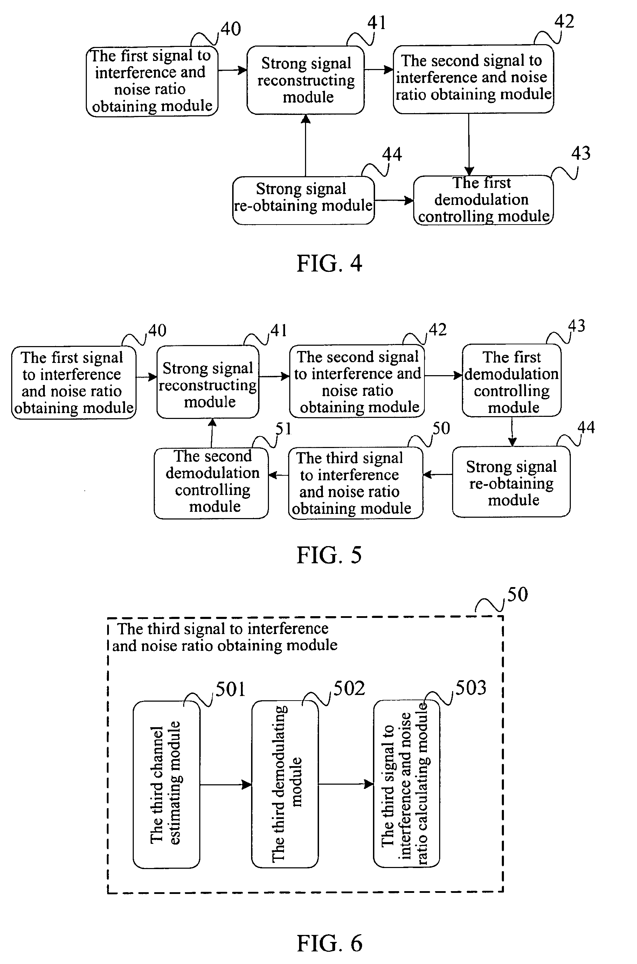

FIG. 4 is a structural schematic diagram of the demodulation system based on the multi-user reusing one slot application in the GSM according to the fourth example proposed in the present invention; the system can be built-in the Base Transceiver Station (BTS) of the GSM, and the system comprises: the first signal to interference and noise ratio obtaining module 40, a strong signal reconstructing module 41, the second signal to interference and noise ratio obtaining module 42, the first demodulation controlling module 43 and a strong signal re-obtaining module 44, wherein

the first signal to interference and noise ratio obtaining module 40 is for: obtaining the first signal to interference and noise ratio according to a strong signal transmitted in a channel which has larger impulse response power in two wireless channels;

the strong signal reconstructing module 41 is for: performing the reconstruction on said strong signal;

the second signal to interference and noise ratio obtaining module 42 is for: subtracting a reconstructed signal based on said strong signal from the total signal received from two wireless channels to obtain a weak signal, and obtaining the second signal to interference and noise ratio according to said weak signal;

the first demodulation controlling module 43 is for: judging whether said second signal to interference and noise ratio is larger than a preset first iteration threshold, if yes, performing the reconstruction on said weak signal, and updating said first iteration threshold with said second signal to interference and noise ratio; otherwise, ending demodulation;

the strong signal re-obtaining module 44 is for: subtracting a reconstructed signal based on said weak signal from the total signal received from two wireless channels to obtain a strong signal, and notifying the strong signal reconstructing module 41 to perform reconstruction on the obtained strong signal.

FIG. 5 is a structural schematic diagram of the demodulation system based on the multi-user reusing one slot application in the GSM according to the fifth example proposed in the present invention; in addition to comprising function modules shown in FIG 4, the system further comprises: the third signal to interference and noise ratio obtaining module 50 and second demodulation controlling module 51, wherein

the third signal to interference and noise ratio obtaining module 50 is for obtaining the third signal to interference and noise ratio according to the obtained strong signal; the second demodulation controlling module 51 is for judging whether the third signal to interference and noise ratio is larger than the second iteration threshold, the initial value of the second iteration threshold is the first signal to interference and noise ratio, and if yes, updating said second iteration threshold with said third signal to interference and noise ratio; otherwise, ending the demodulation;

the strong signal re-obtaining module 44 is further for: notifying the strong signal reconstructing module 41 to perform the reconstruction on the obtained strong signal via the third signal to interference and noise ratio module 50 and second demodulation controlling module 51 in turn after the second demodulation controlling module 51 updating said second iteration threshold.

The first demodulation controlling module 43 is further for:

judging whether said second signal to interference and noise ratio is larger than a preset convergence threshold, if yes, ending demodulation; otherwise, continuing to judge whether said second signal to interference and noise ratio is larger than the first iteration threshold;

if the second signal to interference and noise ratio is not larger than the first iteration threshold, ending the demodulation; otherwise, judging whether the current iteration times are less than preset times, if yes, performing the reconstruction on said weak signal, updating said first iteration threshold with said second signal to interference and noise ratio, and adding 1 into the iteration cumulative times; otherwise, ending the demodulation.

As shown in FIG 6, the third signal to interference and noise ratio obtaining module 50 further comprises the third channel estimating module 501, the third demodulating module 502 and the interference and noise ratio calculating module 503:

the third channel estimating module 501 is for: performing the channel estimation on the channel which transmits the strong signal, and obtaining the impulse response of the channel; performing the channel estimation specifically comprises: using training sequences of two paths of signals to coordinate with a channel estimation algorithm to calculate the impulse response of the wireless channel, and the channel estimation algorithm is not limited, for example, it can be any one of the slide correlation algorithm and the Least Squares Algorithm (LS Algorithm); the training sequences of two paths of signals are orthogonal;

the third demodulating module 502 is for performing demodulation processing on the strong signal according to the impulse response of the channel; the demodulation combining algorithm used by the demodulation processing can be not limited, for example, it can use any one of demodulation combining algorithms such as the MLSE demodulation combining algorithm, MLSE+MRC demodulation combining algorithm, MLSE+IRC demodulation combining algorithm and MLSE+STIRC demodulation combining algorithm and so on;

the third signal to interference and noise ratio calculating module 503 is for: obtaining the third signal to interference and noise ratio according to the signal obtained after the demodulation processing.

The second iteration threshold in the second demodulation controlling module 51 varies with the iteration times, and its initial value is the first signal to interference and noise ratio which is calculated by the first signal to interference and noise ratio obtaining module 40. In the second and subsequent iteration process, its value is the third signal to interference and noise ratio which is calculated by the third signal to interference and noise ratio obtaining module 50 in previous iteration processes.

The demodulation method based on the multi-user reusing one slot application in the present invention makes the iteration continuously improve the demodulation performance by joining the iteration threshold into the iteration process; can end the iteration process earlier at the same time when the demodulation performance is satisfied by configuring the convergence threshold, which increases the demodulation speed; and improves the demodulation performance by using multiple times of iterations.

The demodulation system based on the multi-user reusing one slot application of the present invention can implement the demodulation of two paths of signals of the user transmitted at the same time, and can end the iteration process earlier at the same time when the demodulation performance is satisfied by configuring the convergence threshold, which increases the demodulation speed, which increases the demodulation speed; makes the iteration continuously improve the demodulation performance by joining the iteration threshold into the iteration process; and improves the demodulation performance by using multiple times of iterations.

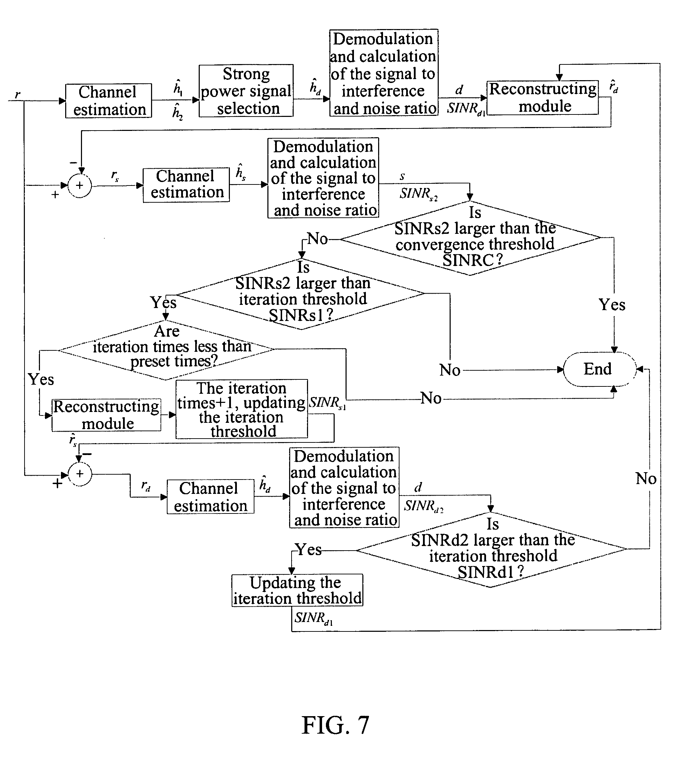

The uplink demodulation processing process based on the multi-user reusing one slot application of the GSM in the present invention is described in detail below with reference to the schematic diagram shown in FIG. 7.

It needs to pointed out specifically that the specific methods used by the channel estimating module and demodulating module are not limited. The channel estimating module can use algorithms such as the slide correlation algorithm, LS, and Joint Least Square Algorithm (JLS) Algorithm, etc.. The demodulating module can use demodulation combining algorithms such as MLSE+MRC, MLSE+IRC, and MLSE+STIRC, etc..

The total signal which is received by the BTS from two wireless channels is r. It should be noted that that the training sequences of two paths of signals should be orthogonal in the MUROS application, herein it is assumed that the training sequences on the wireless channel 1 and the wireless channel 2 are $TSC_1$ and $TSC_1$ , respectively.

Two paths of signals can be demodulated step by step according to the formula $r(t)=d(t)*h_1(t)+s(t)*h_2(t)+I(t)+n(t)$ for calculating the signal $r$, wherein d($t$) and $s$($t$) are signals on the wireless channel 1 and the wireless channel 2 respectively; $I(t)$ is the co-channel interference, and $n(t)$ is the noise; $h_1(t)$ and $h_2(t)$ are impulse responses of the wireless channel 1 and the wireless channel 2 respectively.

Channel estimations are performed by using $TSC_1$ and $TSC_2$ respectively, the channel estimation algorithm is not limited herein, and it can use channel estimation algorithms such as the slide correlation algorithm, LS and JLS, etc.. The impulse response of the channel 1 obtained by using $TSC_1$ is $\hat{h}_1$, and the impulse response of the channel 2 obtained by using $TSC_2$ is $\hat{h}_2$.

Then the relative size of powers of impulse response $\hat{h}_1$ and $\hat{h}_2$ is judged, and if the power of the impulse response of the wireless channel 1 is larger than or equal to the power of the impulse response of the wireless channel 2, then the signal transmitted on the channel 1 is demodulated at first, and at this moment, the impulse response $\hat{h}_d = \hat{h}$, is selected; if the power of the impulse response of the wireless channel 1 is less than the power of the impulse response of the wireless channel 2, then the signal transmitted on the channel 2 is demodulated at first, and at this moment, the impulse response $\hat{h}_d = \hat{h}_2$ is selected. It is assumed that the power of the impulse response of the wireless channel 1 is larger, and then the signal to interference and noise ratio $SINR_{d1}$ of the signal d is calculated after demodulating the signal $d$,.

The reconstruction is performed on the signal $d$ to obtain the signal $\hat{r}_d$ for performing the interference cancellation:

$$\hat{r}_d = d * \hat{h}_d .$$

The weak signal is obtained after performing interference cancellation:

$$r_s = r - \hat{r}_d .$$

The channel estimation is performed again on the wireless channel 2 which transmits the weak signal $r_s$, and the result of the channel estimation is $\hat{h}_s$.

The $r_s$ is demodulated to obtain the data signal $s$.

The signal to interference and noise ratio $SINR_{s2}$ of signal $s$ is calculated.

Whether the $SINR_{s2}$ is larger than the convergence threshold $SINR_c$ is judged, and if yes, demodulation ends; otherwise, it is continued that judging whether $SINR_{s2}$ is larger than the iteration threshold $SINR_{s1}$, if not, the demodulation ends; if yes, it is continued that judging determine whether the iteration times are less than of the set times, if yes, the reconstruction of the signal $\hat{r}_s = s * \hat{h}_s$ is performed, the iteration times adds 1, and the iteration threshold $SINR_{s1}$ is updated, wherein the iteration threshold $SINR_{s1}$ is a reasonable value which is set according to the result of the demodulation performance for the first iteration, and $SINR_{s1} = SINR_{s2}$ for the second and subsequent iterations, wherein $SINR_{s2}$ is the signal to interference and noise ratio of the calculated signal $s$; otherwise, the iteration ends.

The strong signal $r_d = r - \hat{r}_s$ is obtained after performing the interference cancellation, the channel estimation is performed again on the wireless channel 1 which transmits the strong signal $r_d$ and $r_d$ is demodulated, the signal to interference and noise ratio $SINR_{d2}$ is calculated, whether $SINR_{d2}$ is greater than the iteration threshold $SINR_{d1}$ is judged, and if yes, demodulation ends; otherwise, the iteration threshold is updated as $SINR_{d1} = SINR_{d2}$, and then the step of performing reconstruction on the signal d to obtain the signal $\hat{r}_d$ is returned, wherein $\hat{r}_d = d * \hat{h}_d$. The iteration is repeated as such until satisfying the condition and then the demodulation can end.

Data signals d and $s$ of two users which are transmitted on wireless channels at the same time can be obtained after the demodulation ending.

The present invention can significantly increase the uplink demodulation performance, and can implement the demodulation of data signals of two users which are transmitted at the same time so as to provide an uplink demodulation method based on the MUROS application for the BTS of the GSM. The iteration process ends earlier at the same time when the demodulation performance is satisfied by configuring the convergence threshold, which increases the demodulation speed, which increases the demodulation speed. The iteration is made to continuously improve the demodulation performance by joining the iteration threshold into the iteration process; can end, and the demodulation performance is improved by using multiple times of iterations. Besides, the maximum permission times of the iteration can be set flexibly, and if the condition of hardware is permitted in the practical application, the maximum permission times can be set as large as possible so as to increase demodulation performance sufficiently.

The above description is only the preferred examples of the present invention, and is not therefore to limit the patent scope of the present invention. The equivalent structures or the equivalent flows made by using the contents of specification and drawings of the present invention, or applications directly or indirectly used in other related technical fields, are all similarly included in the patent protection scope of the present invention.

**Claims**

1. A demodulation method based on a multi-user reusing one slot application, the method comprising:

   obtaining a first signal to interference and noise ratio according to a strong signal transmitted in a channel which has larger impulse response power in two wireless channels;
   performing reconstruction on said strong signal;
   subtracting a reconstructed signal based on said strong signal from a total signal received from two wireless channels to obtain a weak signal;
   obtaining a second signal to interference and noise ratio according to said weak signal, and judging whether said second signal to interference and noise ratio is larger than a preset first iteration threshold, and if yes, performing reconstruction on said weak signal, and updating said first iteration threshold with said second signal to interference and noise ratio; otherwise, ending a current processing process; and
   subtracting a reconstructed signal based on said weak signal from the total signal to obtain a strong signal, and performing reconstruction on an obtained strong signal again.

2. The demodulation method according to claim 1, before performing reconstruction on the obtained strong signal again, the method further comprising:

   obtaining a third signal to interference and noise ratio according the obtained strong signal;
   judging whether said third signal to interference and noise ratio is larger than a second iteration threshold, an initial value of the second iteration threshold being the first signal to interference and noise ratio, if yes, updating said second iteration threshold with said third signal to interference and noise ratio; otherwise, ending the current processing process.

3. The demodulation method according to claim 1, wherein obtaining the first signal to interference and noise ratio according to the strong signal transmitted in the channel which has larger impulse response power in two wireless channels comprises:

   performing a channel estimation on two wireless channels, obtaining impulse responses of the channels;
   selecting a signal transmitted in the channel which has larger impulse response power as the strong signal;
   performing demodulation processing on the strong signal according to the impulse response of the channel; and
   obtaining the first signal to interference and noise ratio according to a signal obtained after the demodulation processing.

4. The demodulation method according to claim 2, wherein obtaining the third signal to interference and noise ratio according to the obtained strong signal comprises:

   performing a channel estimation on the channel transmitting the strong signal, obtaining an impulse response of the channel;
   performing demodulation processing on the obtained strong signal according to the impulse response of the channel; and
   obtaining the third signal to interference and noise ratio according to a signal obtained after the demodulation processing.

5. The demodulation method according to claim 3, wherein performing reconstruction on said strong signal specifically comprises:

   performing convolution on the signal obtained after the demodulation processing with the impulse response of the channel corresponding to the strong signal, and obtaining the reconstructed signal.

6. The demodulation method according to claim 1 or 2, wherein obtaining the second signal to interference and noise ratio according to said weak signal comprises:

> performing a channel estimation on a channel transmitting the weak signal, obtaining an impulse response of the channel;
> performing demodulation processing on the weak signal according to the impulse response of the channel; and
> obtaining the second signal to interference and noise ratio according to a signal obtained after the demodulation processing.

7. The demodulation method according to claim 6, wherein performing reconstruction on said weak signal specifically comprises:

> performing convolution on the signal obtained after the demodulation processing with the impulse response of the channel corresponding to the weak signal, and obtaining the reconstructed signal.

8. The demodulation method according to claim 1 or 2, before judging whether said second signal to interference and noise ratio is larger than the preset first iteration threshold, the method further comprising:

> judging whether said second signal to interference and noise ratio is larger than a preset convergence threshold, if yes, ending the current processing process; otherwise, continuing to judge whether said second signal to interference and noise ratio is larger than the first iteration threshold;
> before performing reconstruction on said weak signal, the method further comprising:
>
>> judging whether current iteration times are less than preset times, if yes, performing reconstruction on said weak signal, updating said first iteration threshold with said second signal to interference and noise ratio, and adding 1 into iteration cumulative times; otherwise, ending the current processing process.

9. A demodulation system based on a multi-user reusing one slot application, the system comprising: a first signal to interference and noise ratio obtaining module, a strong signal reconstructing module, a second signal to interference and noise ratio obtaining module, a first demodulation controlling module and a strong signal re-obtaining module, wherein the first signal to interference and noise ratio obtaining module is for: obtaining a first signal to interference and noise ratio according to a strong signal transmitted in a channel which has larger impulse response power in two wireless channels;

the strong signal reconstructing module is for: performing reconstruction on said strong signal;
the second signal to interference and noise ratio obtaining module is for: subtracting a reconstructed signal based on said strong signal from the total signal received from two wireless channels to obtain a weak signal, and obtaining a second signal to interference and noise ratio according to said weak signal;
the first demodulation controlling module is for judging whether said second signal to interference and noise ratio is larger than a preset first iteration threshold, and if yes, performing reconstruction on said weak signal, and updating said first iteration threshold with said second signal to interference and noise ratio; otherwise, ending demodulation;
the strong signal re-obtaining module is for: subtracting a reconstructed signal based on said weak signal from the total signal to obtain a strong signal, and notifying the strong signal reconstructing module and to perform reconstruction on an obtained strong signal.

10. The demodulation system according to claim 9, the system further comprising: a third signal to interference and noise ratio obtaining module and a second demodulation controlling module, wherein
the third signal to interference and noise ratio obtaining module is for: obtaining a third signal to interference and noise ratio according to the obtained strong signal;
the second demodulation controlling module is for: judging whether the third signal to interference and noise ratio is larger than a second iteration threshold, an initial value of the second iteration threshold being the first signal to interference and noise ratio, if yes, updating said second iteration threshold with said third signal to interference and noise ratio; otherwise, ending demodulation;
the strong signal re-obtaining module is further for: notifying the strong signal reconstructing module to perform reconstruction on the obtained strong signal via the third signal to interference and noise ratio obtaining module and the second demodulation controlling module in turn after the second demodulation controlling module updating said second iteration threshold.

11. The demodulation system according to claim 9 or 10, wherein the first demodulation controlling module is further for:

> judging whether said second signal to interference and noise ratio is larger than a preset convergence threshold, if yes, ending demodulation; otherwise, continuing to judge whether said second signal to interference and noise ratio is larger than the first iteration threshold;
> if the second signal to interference and noise ratio is not larger than the first iteration threshold, ending demodulation; otherwise, judging whether current iteration times are less than preset times, if yes, performing reconstruction on said weak signal, updating said first iteration threshold with said second signal to interference and noise ratio, and adding 1 into iteration cumulative times; otherwise, ending demodulation.

Start

S10

Obtaining the first signal to interference and noise ratio according to the strong signal transmitted in a channel which has larger impulse response power in two wireless channels

S11

Performing the reconstruction on said strong signal

S12

Subtracting a reconstructed signal based on said strong signal from the total signal received from two wireless channels to obtain a weak signal

S13

Is the second signal to interference and noise ratio larger than the first iteration threshold?

No

Yes

S14

Performing the reconstruction on said weak signal, and updating said first iteration threshold to be said second signal to interference and noise ratio

S15

Subtracting a reconstructed signal based on said weak signal from the total signal received from two wireless channels to obtain a strong signal

End

FIG. 1

Start

S10 Obtaining the first signal to interference and noise ratio according to the strong signal transmitted in a channel with larger impulse response power in two wireless channels

S11 Performing the reconstruction on said strong signal

S12 Subtracting a reconstructed signal based on said strong signal from the total signal received from two wireless channels to obtain a weak signal

S13 Is the second signal to interference and noise ratio larger than the first iteration threshold?

No

Yes

S14 Performing the reconstruction on said weak signal, and updating said first iteration threshold to be said second signal to interference and noise ratio

S15 Subtracting a reconstructed signal based on said weak signal from the total signal received from two wireless channels to obtain a strong signal

S16 Obtaining the third signal to interference and noise ratio according to the obtained strong signal

End

S17 Is the third signal to interference and noise ratio larger than the second iteration threshold?

No

Yes

S18 Updating said second iteration threshold to be said third signal to interference and noise ratio

FIG. 2

Start

S10 Calculating a first signal to interference and noise ratio according to the strong signal transmitted in a channel with larger impulse response power in two wireless channels

S11 Performing the reconstruction on said strong signal

S12 Subtracting a reconstructed signal based on said strong signal from the total signal received from two wireless channels to obtain a weak signal

S20 Is the second signal to interference and noise ratio larger than the convergence threshold?
No

S21 Is the second signal to interference and noise ratio larger than the first iteration threshold?
Yes

S22 Are the current iteration times less than the preset times?
No → End
Yes

S23 Performing the reconstruction on said weak signal, and updating said first iteration threshold to be said second signal to interference and noise ratio, and adding 1 into the iteration cumulative times

S15 Subtracting a reconstructed signal based on said weak signal from the total signal received from two wireless channels to obtain a strong signal

S16 Calculating the third signal to interference and noise ratio according to the obtained strong signal

S17 Is the third signal to interference and noise ratio larger than the second iteration threshold?
Yes

S18 Updating said second iteration threshold to be said third signal to interference and noise ratio

No → End

Yes → End

**FIG. 3**

FIG. 4

FIG. 5

FIG. 6

FIG. 7

# INTERNATIONAL SEARCH REPORT

| International application No. |
| --- |
| PCT/CN2010/073370 |

**A. CLASSIFICATION OF SUBJECT MATTER**

H04W28/00(2009.01)i

According to International Patent Classification (IPC) or to both national classification and IPC

**B. FIELDS SEARCHED**

Minimum documentation searched (classification system followed by classification symbols)

IPC: H04W28/-, H04W72/-, H04B, H04L

Documentation searched other than minimum documentation to the extent that such documents are included in the fields searched

Electronic data base consulted during the international search (name of data base and, where practicable, search terms used)

CPRSABS, CNKI, WPI, EPODOC: USER?, SUBSCRIBER?, MULTIPLEX+, SLOT, DEMODUL+, RECONSTRUCT+, RECONSTITUT+, RECOMPOS+, SIGNAL, THRESHOLD

**C. DOCUMENTS CONSIDERED TO BE RELEVANT**

| Category* | Citation of document, with indication, where appropriate, of the relevant passages | Relevant to claim No. |
| --- | --- | --- |
| A | CN101577934A(HUAWEI TECHNOLOGIES CO LTD) 11 Nov. 2009(11.11.2009) the whole document | 1-11 |
| A | CN101515917A(UNIV SOUTHEAST) 26 Aug. 2009(26.08.2009) the whole document | 1-11 |
| A | WO02069443A1(ITT MFG ENTERPRISES INC[US] et al.) 06.9 月 2002(06.09.2002) the whole document | 1-11 |

☐ Further documents are listed in the continuation of Box C. ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim (S) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>23 Aug. 2010(23.08.2010) | Date of mailing of the international search report<br>**23 Sep. 2010 (23.09.2010)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br>CHAO, Lulin<br>Telephone No. (86-10)62411986 |

Form PCT/ISA /210 (second sheet) (July 2009)

**INTERNATIONAL SEARCH REPORT**
Information on patent family members

| International application No. |
|---|
| PCT/CN2010/073370 |

| Patent Documents referred in the Report | Publication Date | Patent Family | Publication Date |
|---|---|---|---|
| CN101577934A | 11.11.2009 | None | |
| CN101515917A | 26.08.2009 | None | |
| WO02069443A1 | 06.09.2002 | US2002154687A1 | 24.10.2002 |
| | | AU2002252109A1 | 12.09.2002 |
| | | US7260141B2 | 21.08.2007 |

Form PCT/ISA /210 (patent family annex) (July 2009)